(19) Europäisches Patentamt
European Patent Office
Office européen des brevets

(11) Numéro de publication: **0 083 893**
**B1**

(12) # FASCICULE DE BREVET EUROPEEN

(45) Date de publication du fascicule du brevet: **10.07.85**

(51) Int. Cl.⁴: **H 04 M 3/42**, H 04 M 3/50, H 04 M 11/06

(21) Numéro de dépôt: **82402385.7**

(22) Date de dépôt: **24.12.82**

(54) **Système de transmission de messages à un poste téléphonique par la ligne d'abonné dans une installation téléphonique.**

(30) Priorité: **30.12.81 FR 8124542**
**17.11.82 FR 8219239**

(43) Date de publication de la demande:
**20.07.83 Bulletin 83/29**

(45) Mention de la délivrance du brevet:
**10.07.85 Bulletin 85/28**

(84) Etats contractants désignés:
**AT BE CH DE GB IT LI LU NL SE**

(56) Documents cités:
**FR - A - 2 452 842**
**GB - A - 452 495**
**US - A - 4 232 199**

**THE BELL SYSTEM TECHNICAL JOURNAL, vol. 57, no. 10, décembre 1978, pages 3487-3502, New York, (USA); W.E. BAKER et al.: "Transaction stations"**
**IBM TECHNICAL DISCLOSURE BULLETIN, vol. 23, no. 9, février 1981, pages 4006-4008, New York (USA); C.H. SEDERHOLM et al.: "Intelligent telephone"**

(73) Titulaire: **Segre-Amar, Leonello, 26, avenue de la Grande-Bretagne, Monte-Carlo (MC)**

(72) Inventeur: **Segre-Amar, Leonello, 26, avenue de la Grande-Bretagne, Monte-Carlo (MC)**

(74) Mandataire: **Durand, Yves Armand Louis et al, Cabinet Z. Weinstein 20, Avenue de Friedland, F-75008 Paris (FR)**

**EP 0 083 893 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne un système de transmission de messages à un poste téléphonique par la ligne téléphonique associée à celui-ci, dans une installation téléphonique comprenant un dispositif générateur de signaux de service relatifs à l'établissement d'une liaison téléphonique entre ce poste et un autre poste téléphonique (FR-A-2 452 842).

Ces signaux de service, tels que par exemple des signaux de manœuvre, de ligne libre, de retour de l'appel, d'acheminement ou d'occupation sont envoyés à tout utilisateur d'un poste téléphonique qui a décroché le combiné et désire lancer un appel à un autre poste téléphonique ou est en train de le faire. Cet utilisateur demandeur d'une liaison téléphonique doit prendre en considération ces signaux de service car ils le renseignent sur l'état du réseau téléphonique, déterminant le déroulement de la procédure d'appel et indiquant si son appel aboutit ou non. Ceci signifie que l'utilisateur est à l'écoute pendant pratiquement toute la phase d'établissement de la communication, à l'exception des instants d'actionnement du cadran ou du clavier.

La présente invention a pour objectif de proposer un système permettant de transmettre pendant les phases de présence de ces signaux de service ou au moins de certains de ces signaux des messages par exemple sonores tels que des textes publicitaires ou de toute autre nature ou de la musique.

Pour atteindre ce but, le système de transmission de messages selon l'invention comprend un mélangeur à deux entrées qui sont reliées respectivement au dispositif générateur de signaux de service et à un dispositif générateur de messages, la sortie du mélangeur étant reliée à la ligne téléphonique.

Suivant une caractéristique avantageuse de l'invention, le système comprend un synchronisateur des émissions de signaux de service et des messages.

Suivant une autre caractéristique avantageuse de l'invention, le mélangeur est formé par un transformateur à deuxenroulements primaires et un enroulement secondaire et les bornes libres des enroulements constituent les entrées du mélangeur, la borne commune des enroulements étant mis à la masse.

Par ailleurs il est proposé un système de transmission de messages à un poste téléphonique complété par un écran de visualisation et, le cas échéant d'autres moyens récepteurs de messages, tels qu'un dispositif d'impression. Ce poste téléphonique devenu ainsi plutôt un terminal d'abonné est par conséquent adapté pour être relié à un réseau télématique destiné à la transmission de données. Par exemple ce terminal pourrait être connecté à un réseau de visiophonie ou un réseau de consultation de banques de données.

Suivant cette caractéristique avantageuse de l'invention le générateur de messages est constitué par un dispositif émetteur de signaux, tels que des signaux de données, susceptibles d'être reproduits dans le poste téléphonique d'abonné demandeur de l'établissement de la liaison téléphonique sur un support tel qu'un écran de visualisation et/ou d'impression, ce dispositif émetteur étant relié à une entrée d'un mélangeur dont une autre autrée reçoit les signaux de service, la sortie de ce mélangeur étant susceptible d'être connectée à la ligne d'abonné demandeur.

Suivant une caractéristique avantageuse de la présente invention, le système de transmission comprend un séparateur des signaux de service, des signaux à reproduire sur un support, dans le poste d'abonné.

Suivant encore une caractéristique avantageuse, le système de transmission comprend un détecteur de la présence de signaux de service et, le cas échéant, un détecteur de l'instant de la réponse du poste d'abonné demandé, ces deux détecteurs étant reliés à un circuit de commande respectivement de mise en marche et d'arrêt du générateur de messages.

Suivant encore une autre caractéristique avantageuse de l'invention, le poste d'abonné est équipé d'un dispositif mémoire permettant de stocker les informations reçues du générateur de messages pendant la phase d'établissement de la liaison avec le poste d'abonné demandé et de reproduire ces informations à tout instant approprié désiré sur le support, tel que l'écran de visualisation.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels:

La figure 1 montre sous forme d'un schéma bloc le principe du système de transmission de messages selon la présente invention.

La figure 2 illustre le montage du synchronisateur du schéma bloc suivant la figure 1, et

La figure 3 montre un autre mode de réalisation de l'invention permettant la visualisation de messages.

Comme le montre la figure, une installation téléphonique à laquelle s'applique la présente invention comprend un dispositif générateur de courants spéciaux GS destiné à l'emission d'un certain nombre de signaux de service, tels que des signaux de manœuvre, de retour d'appel, d'acheminement, d'occupation, d'appel etc. Ces signaux sont envoyés à chaque poste d'abonné dont le combiné a été retiré dans le but d'établir à partir de ce poste une liaison téléphonique avec un autre poste d'abonné. Suivant la figure 1, les signaux de service parviennent au poste téléphonique demandeur d'une communication, successivement à travers des tronçons de lignes téléphonique A et B et une section de réseau téléphonique SR. Chacune des différentes sections SR (dont seulement deux sont représentées à titre d'exemple) est reliée au tronçon de ligne B par un transformateur TRS.

Comme il ressort de la figure 1, la liaison directe entre les tronçons de lignes téléphonique A et B peut être interrompue à l'aide d'un inverseur commutateur IN1 pour connecter entre ces deux tronçons le système de transmission de messages selon la présente invention.

Ce système comprend un mélangeur TRM à deux entrées E1, E2 et une sortie S. Dans l'exemple représenté, le mélangeur est formé par un transformateur à deux enroulements primaires qui sont montés en série et dont le point commun est relié à la masse. La borne libre de chaque enroulement primaire constitue une des deux entrées E1, E2 du mélangeur. L'entrée E1 est reliée à la sortie d'un dispositif amplificateur différentiel AM dont l'entrée de commande est reliée au tronçon de ligne d'arrivée A, par l'intermédiaire de l'inverseur IN1. L'entrée E2 du transformateur-mélangeur TRM est susceptible d'être connecté à un dispositif générateur de messages GM, pa- exemple de messages sonores, par l'intermédiaire d'un atténuateur AT, d'un inverseur IN2, d'un circuit de synchronisation CS, d'in inverseur IN3 et d'un transformateur approprié TRG. Un inverseur IN4 permet de sortir le synchronisateur CS du circuit interconnectant le mélangeur TRM et le générateur de messages GM. L'entrée et la sortie des messages à transmettre, du circuit de synchronisation CS sont désignées par E1 et S. Le circuit de synchronisation CS comprend une deuxième entrée E2 à laquelle il reçoit les signaux de service provenant du tronçon de ligne A. Le montage du circuit de synchronisation CS sera décrit plus loin, de façon détaillée.

Concernant le montage de l'amplificateur AM on constate que son entrée de commande est reliée au curseur d'un potentiomètre P1 connecté par une borne au tronçon de ligne A. L'autre borne est mise à la masse. La sortie de l'amplificateur AM est reliée par un condensateur C1 à l'entrée E1 du transformateur-mélangeur TRM. Un circuit en série formé par un condensateur C2 et une résistance R1 est interposée entre cette entrée et la masse. La sortie de l'amplificateur AM est en outre connectée par deux résistances en série R2, R3 à la masse. La deuxième entrée E2 de l'amplificateur est reliée par un condensateur C3 au point commun des deux résistances R2, R3. On constate encore qu'un condensateur C4 est interconnecté entre l'entrée E1 de l'amplificateur AM et la masse.

Il est à noter que le dispositif générateur de messages GM pourrait comprendre un ou plusieurs (par exemple deux comme sur la figure 1) lecteurs de cassettes ou de disques et des générateurs de secours ou de tout autre genre. Il est avantageux qu'un générateur qui fonctionne en principe 24 heures sur 24 soit un générateur à disque tandis que pour la diffusion de messages spécifiques un générateur à cassettes est plus approprié parce qu'il présente l'avantage d'un changement rapide de la cassette. Supplémentairement au générateur de messages GM, le système selon l'invention pourrait comporter une source de modulations extérieure SME pour la diffusion de messages particuliers et occasionnels. Cette source pourrait être reliée au mélangeur TRM, à la place du dispositif générateur GM, soit directement par l'inverseur IN2, soit par l'intermédiaire du circuit de synchronisation CS en mettant l'interrupteur IN3 dans sa position non représentée.

On décrira ci-après le montage du circuit de synchronisation CS en se reportant à la figure 2.

Le circuit de synchronisation comprend deux parties, une première partie I pour la commande de la mise en marche et de l'arrêt du dispositif générateur de messages GM et une deuxième partie II destiné à établir ou à interrompre la liaison entre le dispositif générateur GM et le mélangeur TRM. L'action de la partie I sur le dispositif générateur GM est matérialisée à la figure 1 par la ligne fléchée F.

La partie I est reliée à l'entrée E2 de réception des signaux de service. Elle comprend une bascule BA1 formée de deux portes-NI P1, P2 chacune à deux entrées. De façon connue en soi, la sortie d'une porte est reliée à une entrée de l'autre porte. L'entrée libre de chaque porte constitue une entrée de la bascule. L'entrée libre de la porte P1 est reliée à l'entrée E2 du circuit de synchronisation CS, qui est destiné à la réception des signaux de service, par l'intermédiaire d'un circuit qui comprend essentiellement un transformateur d'entrée TRC, un filtre passe-bas PB, une bascule de Schmitt BS1, un inverseur de polarité IV1 et un circuit différentiel CD1. Ce dernier comprend un condensateur C6 interposé entre l'inverseur IV1 et l'entrée de la porte P1 et un montage en parallèle d'une résistance R5 et d'une diode D1, qui relie cette entrée à la masse. C'est l'anode de la diode qui est à la masse. A titre de bascule de Schmitt on utilise un montage en série de deux inverseurs IV2, IV3 formés chacun par une porte NON-ET dont les entrées sont réunies. Une résistance R6 est montée en parallèle aux inverseurs. Le filtre passe-bas PB comprend un condensateur C5 monté en parallèle à l'enroulement secondaire du transformateur TRC et un montage en série d'une résistance variable R7 et une résistance R8, interposé entre la secondaire du transformateur et la bascule BS1. Le point commun des deux résistances R8 et R17 est relié à la cathode d'une diode D2 dont l'anode est mise à la masse. Ce point commun est en outre relié au contact fixe d'un bouton interrupteur B1. Le contact mobile de ce dernier est relié à un potentiel de tension positif par une résistance R9. Au repos, l'interrupteur est dans sa position d'ouverture.

La sortie de la porte P1, qui constitue une sortie de la bascule BA1 est connectée par l'intermédiaire d'une résistance R10 à la base d'un transistor-commutateur T1. Dans le circuit d'émetteur de ce transistor sont montées en série une résistance R11 et une diode à émission de lumière DE1. Cette diode émet une lumière par exemple de couleur rouge. L'émetteur du transistor T1 constitue une sortie du circuit de commande du dispositif générateur de messages GM.

L'entrée libre de la porte P2, qui constitue la deuxième entrée de la bascule BA1 est reliée à un diviseur de tension formé par une résistance R12 reliée à un potentiel positif et une résistance varaible R13 qui est mise à la masse, par l'intermédiaire d'une résistance R14, d'une bascule de Schmitt BS2 et d'un circuit différentiel CD2. La bascule de Schmitt BS2 et le circuit différentiel CD2 présentent la même structure que la bascule BS1 et du circuit différentiel CD1. Les inverseurs IV4, IV5 et la résistance R15 correspondent respectivement aux inverseurs IV2 et IV3 et à la résistance R6. Le circuit différentiel CD2 comprend par conséquent un condensateur C8, une résistance R17 et une diode D4 qui correspondent respectivement au condensateur C6, la résistance R5 et la diode D1.

Concernant le diviseur de tension, on constate qu'une résistance R16 peut être reliée en parallèle à la résistance R12 parun bouton interrupteur B2 ouvert dans sa position de repos.

La sortie de la porte P2, qui forme une deuxième sortie de la bascule BA1 est reliée par un résistance R18 à un transistor — commutateur T2. L'émetteur de ce transistor forme une deuxième sortie de commande pour le dispositif générateur GM et est relié à la masse par un résistance R19 et une diode à émissin de lumière DE2 susceptible d'émettre une lumière de couleur verte.

La partie II du circuit synchronisateur CS pour l'établissement de la liaison entre le transformateur-mélangeur TRM et le dispositif générateur GM comprend un contact de relais r1 qui est interposé entre l'entrée E1 du circuit de synchronisation CS et la sortie S de celui-ci. A l'état de repos, la contact r1 est ouvert et met la sortie S à la masse, par l'intermédiaire d'une résistance R20. Ce contact r1 est commandé par un relais R qui est monté dans le circuit émetteur d'un transistor T3. Un montage formé par une résistance R21 et une diode à émission de lumière DE3 susceptible d'émettre une lumière de couleur verte est montée en parallèle au relais R. Entre les deux bornes du relais est en ourte reliée une diode D5. L'anode de celle-ci est mise à la masse.

Le transistor T3 est commandé par une bascule BA2. A cette fin, une sortie de cette bascule est reliée à la base du transistor T3, par l'intermédiaire d'une résistance R22. Une deuxième sortie de la bascule est connectée à un montage en série d'une résistance R23 et d'une diode à émission de lumière DE4. Cette diode DE4 diffuse une lumière rouge. La bascule BA2 est formée, comme la bascule BA1, par deux portes NI P3, P4 à deux entrées, une entrée de chaque porte étant reliée à la sortie de l'autre porte. L'entrée libre de chaque porte constitue une entrée de commande de la bascule.

Le circuit de commande de la bascule BA2 comprend un potentiomètre P2 qui est interposé entre l'entrée E1 du circuit de synchronisation CS et la masse, une bascule de Schmitt ES3 reliée à son entrée au curseur du potentiomètre P2 et à sa sortie à deux circuits d'entrée parallèles dont chacun est relié à l'entrée libre d'une porte P3, P4. Le circuit d'entrée de la porte P3 comprend un circuit différentiel CD3, tandis que le circuit d'entrée de la porte P4 comporte un circuit différentiel CD4 qui est précédé par un inverseur IV6. Les circuits différentiels CD3 et CD4 présentent la même structure que le circuit différentiel CD1. Le circuit différentiel CD3 comprend donc un condensateur C10, une résistance R24 et une diode D6. Les éléments du circuit différentiel CD4 portent les références C11, R25 et D7. La bascule de Schmitt BS3 comprend deux inverseurs IV7 et IV8. Parallèles à ceux-ci est montée une résistance R26. Une résistance R27 est interposée entre le curseur du potentiomètre P2 et l'entrée de la bascule de Schmitt BS3. On constate en outre qu'une diode D8 est montée entre le curseur et la masse. C'est l'anode qui est reliée à cette dernière.

Les parties I et II du circuit de synchronisation CS sont interconnectées par une diode D9 assurant que la partie II puisse agir sur la partie I.

En se reportant à nouveau à la figure 1, on constate que le système selon l'invention comprend également un haut-parleur HP et un casque d'écoute CE, qui peuvent être connectés au système selon l'invention à l'aide de deux inverseurs IN6 et IN7. Suivant la position de l'inverseur IN7, le heut-parleur ou le casque peuvent être reliés en parallèle au tronçon de ligne B ou à la place de celui-ci.

Le système de transmission de message suivant la présente invention, qui vient d'être décrit, fonctionne de la manière suivante:

La diffusion d'un message sur le réseau téléphonique peut avoir lieu dès que les inverseurs IN1 à IN5 se trouvent dans leur position représentée à la figure 1. Le début de l'émission d'un message est déterminé par le circuit de synchronisation CS, de façon synchrone avec l'arrivée d'un signal de service.

Avant l'arrivée d'un tel signal en provenance du générateur GC, et avant la fermeture du bouton interrupteur B1, la bascule BA1 di circuit de synchronisation CS est polarisée de manière que la sortie de la porte P1 présente un potentiel positiv représentatif de la valeur logique 1. La sortie de la porte P2 est donc à l'état 0, ce qui a pour conséquence que l'entrée de la porte P1 qui est reliée à cette sortie est également à l'état 0. En raison de l'emplacement du condensateur C6, l'entrée libre de la porte P1 présente d'office la valeur 0. Quant à la porte P2, à cause de son condensateur C8, son entrée libre est à 0, tandis que l'autre entrée présente la valeur 1. Dans ces conditions, le transistor T1 est conducteur et la diode DE1 émet une lumière rouge indiquant que le dispositif générateur de message GM est à l'arrêt. Le transistor T2 est bloqué. En ce qui concerne la bascule BA2, c'est la sortie de la porte P3 qui présente l«état 1. Les deux entrées de la porte sont par conséquent à l'état 0, en raison de la valeur 0 à la sortie de la porte P4 et de l'emplacement du condensateur C11. Les entrées de la porte P4 sont respectivement à l'état 0 et 1. Dans ces conditions la diode DE4 est excitée. Le transistor T3 est bloqué et le relais R n'est pas excité. Son contact r1 est ouvert.

En fermant le bouton interrupteur B1 on rend la bascule BA1 sensible aux signaux de service arrivant à l'entrée E2 du circuit de synchronisation CS. Ces signaux font passer l'entrée libre de la porte P1 de l'état 0 à l'état 1 et font ainsi basculer la bascule BA1. La sortie de la porte P2 prend la valeur 1, ce qui rend conducteur le transistor T2 et provoque à l'émetteur la production d'un signal positif qui est transmis au dispositif générateur CM et met en marche celui-ci. Le générateur commence alors à émettre des signaux représentant le message à diffuser. Ces signaux de message font passer l'entrée libre de la porte P3 de la bascule BA2 à l'état 1, ce qui provoque le basculement de BA2, la conduction du transistor T3, l'excitation du relais R et la fermeture du contact r1. Celui-ci fermé, les signaux de message de provenance du générateur GM peuvent parvenir à l'entrée E2 du mélangeur TRM qui reçoit son autre entrée E1 les signaux de service. Le mélangeur produit à sa sortie S un mélange des deux genres de signaux. Celui-ci peut être dosé à l'aide du dispositif amplificateur AM qui fonctionne en écréteur-amplificateur et à l'aide de l'atténuateur AT. Les messages du générateur GM peuvent être de toute nature appropriée, par exemple des messages musicaux ou publicitaires. Il est à noter que pendant la transmission des messages, les portes P2 et P4 des bascules BA1 et BA2 présentent à leurs deux entrées le potentiel 0 et à leurs sorties la valeur 1.

A la fin de la transmission d'un message, l'entrée libre de la porte P4 revient au niveau 1, ce qui provoque le basculement de BA2, le blocage du transistor T3, la désexcitation du relais R et l'ouverture du contact r1 et donc l'interruption de la liaison entre le mélangeur TRM et le dispositif générateur de message GM. Par l'intermédiaire de la diode D9, le basculement de BA2 provoque le basculement de BA1. La sortie de la porte P1 redevient positive, ce qui a pour conséquence de rendre conducteur le transistor T1. Le signal positif qui est engendré à l'émetteur de celui-ci arrête le dispositif générateur GM.

Si l'on désire arrêter le générateur GM, avant la fin d'un message, il suffit de fermer le bouton interrupteur B2, ce qui entraîne le passage de 0 à 1 de l'entrée libre de la porte P2. La bascule BA1 change d'état. Comme il vient d'être indiqué, il en résulte l'arrêt du générateur GM.

Il est évident que le système selon les figures 1 et 2 tel qu'il a été décrit et représenté peut être modifié de diverses manières, sans sortir du cadre de la présente invention. Par exemple le mélangeur pourrait être de toute nature appropriée. Le circuit de synchronisation CS pourrait comprendre des moyens entraînant l'arrêt du générateur GM à la fin d'un signal de service. Le dispositif générateur GM pourrait comprendre un nombre quelconque de générateurs dont chacun est susceptible d'être branché au transformateur TRG, par l'intermédiaire d'un interrupteur, comme cela est indiqué à la figure 1.

La figure 3 montre un mode de réalisation de l'invention qui est adapté à un système télématique.

Comme on le voit sur la figure 3, dans un tel système un terminal d'abonné A est relié par une ligne téléphonique d'abonné LT à un poste central B. Le terminal d'abonné A comprend un appareil téléphonique AT et un dispositif de treitement de données TD, destiné à reproduire sur un support approprié les informations ou données, qui peuvent être transmission au terminal A par la ligne d'abonné LT. Suivant la figure, les entrées de l'appareil téléphonique AT et du dispositif de traitement de données TD sont reliées respectivement à une sortie d'un séparateur de signaux SP dont l'entrée est reliée à la ligne téléphonique d'abonné LT. Ce séparateur a pour fonction de séparer les signaux acoustiques destinés à être restitués par l'écouteur de l'appareil téléphonique AT, des signaux de données par exemple numériques, devant être traités dans le dispositif TD.

Dans l'exemple représenté, ce dispositif de traitement de données TD comprend essentiellement un dispositif à écran de visualisation EV tel que par exemple un écran cathodique, un dispositif d'impression IM tel qu'une imprimante et un dispositif mémoire ME.

Ces différents dispositifs sont reliés à une unité modulateur-démodulateur (MODEM) MD1 accomplissant la fonction d'un convertisseur comme cela est connu dans la technique. Le dispositif mémoire ME est adapté pour recevoir des informations en série et de les transmettre en parallèle ou en série mais à une vitesse de transmission le cas échéant plus élevée. Les flèches illustrent l'action du dispositif mémoire sur les dispositifs à écran EV sur le dispositif d'impression IM.

Du côté du poste central B, on constate la présence d'un mélangeur M dont les deux entrées sont susceptibles d'être reliées à un générateur de signaux de service GS et un générateur de messages GM. La sortie du mélangeur est reliée à la ligne d'abonné LT.

Suivant la présente invention, le générateur de messages est constitué par un dispositif émetteur de signaux tels que des signaux de données, susceptibles d'être traités dans un dispositif de traitement de données, tel que le dispositif TD du terminal d'abonné A, c'est-à-dire de messages destinés à être reproduits sur un support tel que l'écran de visualisation EV et/ou un support d'impression (imprimante IM). A l'aide le cas échéant d'un dispositif MODEM MD2 les informations à destination du terminal A peuvent être traitées de façon à correspondre du point de vue de la vitesse de transmission et de la bande de fréquence passante aux signaux de données normalement transmis par le réseau.

Le générateur de message GM est commandé par un circuit de commande C sous l'effet, suivant l'exemple représenté, de deux détecteurs D1, D2, reliés à la ligne téléphonique, entre le générateur de signaux de service GS et le mélangeur. Le détecteur D1 pourrait avoir pour fonction de détecter la présence sur la ligne d'abonné, d'un signal de service, par exemple du signal invitant l'abonné utilisateur du terminal A après que celui-ci ait décroché le combiné de son appareil téléphonique AT, de composer le numéro d'appel du poste ou terminal avec lequel il désire communiquer. Le détecteur D2 pourrait être sensible à la fin de la phase d'établissement de la liaison téléphonique et notamment à l'instant auquel l'abonné appelé répond par exemple en décrochant son combiné. Le signal produit par le détecteur D1 pourrait amener le circuit de commande C à provoquer la mise en service ou mise en marche du générateur de message tandis qu'un signal en provenance du détecteur D2 pourrait provoquer l'arrêt du générateur GM, par l'intermédiaire du circuit de commande C. Dans ce cas, le générateur GM émettrait des messages pendant toute la phase d'établissement de la liaison téléphonique jusqu'à l'instant d'une réponse positive du poste abonné appelé.

Bien entendu, les détecteurs pourraient être adaptés, tout en étant, le cas échéant, complétés par d'autres détecteurs, pour accomplir des fonctions plus complexes et par exemple faire en sorte que le générateur GM soit en étant d'émission uniquement pendant les phases d'absence de signaux de service ou pendant seulement certaines périodes de la phase d'établissement de ligne. On pourrait également prévoir que le générateur de service GS commande directement ou indirectement le générateur de messages, en fonction du type de signaux de service qu'ilémet, comme cela est symbolisé par la ligne fléchée en traits interrompus.

La réalisation de ces différentes fonctions, simples ou même complexes, de commande du générateur de messages GM peut être accomplie de toute manière appropriée connue.

Il est à noter que les signaux de service sont constitués par des périodes de présence d'oscillations à des fréquences de quelques centaines de Hertz, par exemple entre 400 et 500 Hertz. Ces signaux sont donc facilement détectables.

On comprend aisément que dans ces circonstances la séparation des signaux de service, des signaux de données peut être accomplie facilement par le séparateur SP du terminal d'abonné A si le MODEM MD2 formant convertisseur, associé au générateur de messages GM, utilise des fréquences porteuses suffisamment éloignées des fréquences de service.

Pour compléter la description du système de transmission de messages représenté, ce système comprend un commutateur CM1 permettant de court-circuiter le mélangeur M et un commutateur CM2 destiné è relier alternativement et directement l'appareil téléphonique AT et le dispositif de traitement de données TD à la ligne LT, sans que les signaux soient obligés de passer à travers le séparateur SP. Comme cela est symbolisé par des lignes fléchées, le commutateur CM1 pourrait être commandé par le dispositif de commande C en synchronisme avec le fonctionnement du générateur de messages GM.

Le fonctionnement du système de transmission de messages découle de la description de la structure de ce système et des fonctions que les différents éléments et dispositifs doivent accomplir.

Lorsqu'un abonné propriétaire du terminal A souhaite d'être mis en communication par le réseau téléphonique ou de transmission de données avec un autre poste ou terminal d'abonné, qui peut être une banque de données ou un centre de transaction, par exemple bancaire, ou toute autre institution émettrice d'informations, il décroche le combiné de son appareil téléphonique AT. A la suite de cette opération, le poste central lui transmet des signaux de service l'invitant à faire les opérations nécessaires pour l'établissement de la liaison téléphonique. Suivant les fonctions attribuées aux détecteurs D1, D2, qui ont été énoncés plus haut, le générateur de message GM émettra des messages de nature appropriée pour pouvoir être reproduits dans le terminal d'abonné A d'où émane la demande d'établissement d'une liaison téléphonique. Ces signaux, avant de parvenir au mélangeur M et avant d'être introduits sur la ligne téléphonique d'abonné LT où ils seront, le cas échéant, superposés aux signaux de service, seront traités par le MODEM MD2 pour être adaptés aux propriétés et possibilités du réseau. Ce traitement est bien entendu différent selon que les lignes téléphoniques sont des lignes ordinaires ou spéciales c'es-à-dire constituées par exemple par des fibres optiques ou des câbles coaxiaux. Il est bien connu que dans ce dernier cas le débit de chiffres binaires c'est-à-dire la vitesse de la transmission où la rapidité de modulation peut être beaucoup plus élevée et permettre même la transmission de signaux de télévision. Les MODEM MD1 et MD2 devraient donc être conçus en fonction de la rapidité de modulation admissible du réseau.

Le système selon la présente invention permet la transmission de données, depuis le générateur de messages GM pendant toute la phase de l'établissement de la liaison téléphonique.

Dans le terminal d'abonné A, les signaux de données après avoir traversé le séparateur SP peuvent être visualisés directement et immédiatement sur l'écran EV ou imprimés par le dispositif d'impression IM. Si le réseau permet une vitesse de transmission suffisante, l'abonné demandeur pourrait voir apparaître sur son écran par exemple une image de télévision ou un texte. Si la ligne téléphonique ne permet pas une vitesse de transmission suffisamment élevée, c'est-à-dire un débit de chiffres binaires suffisant pourun affichage direct sous forme d'une image sur l'écran, on pourrait stocker les informations dans la mémoire ME et les transmettre ultérieurement, par exemple à un instant donné, à un débit suffisant, à l'écran ou à l'imprimante.

On comprend que le système de transmission de messages selon la présente invention permet un grand nombre d'applications sans sortir du principe qui vient d'être énoncé. Bien entendu on pourrait utiliser dans le système suivant la figure 3 un circuit synchronisateur du type décrit dans le cadre du mode de réalisation représenté aux figures 1 et 2.

Inversement un circuit de commande d'un dispositif de détection tel que représenté et décrit en rapport au système suivant la figure 3 est utilisable dans le mode de réalisation selon la figure 1, en remplacement du synchronisateur. On pourrait donc ainsi prévoir pour le premier mode de réalisation une émission de messages pendant la phase de silence entre deux signaux de service successifs. De façon générale, les moyens utilisés dans un mode de réalisation peuvent être incorporés à l'autre mode, au moins dans une version de réalisation appropriée et, le cas échéant, équivalente.

**Revendications**

1. Système de transmission de messages à un poste téléphonique par la ligne téléphonique associée à celui-ci, dans une installation téléphonique comprenant un dispositif générateur de signaux de service relatifs à l'établissement d'une liaison téléphonique entre ce poste et un autre poste téléphonique, caractérisé en ce qu'il comprend un mélangeur (TRM, M) à deux entrées (E1, E2) qui sont reliées respectivement au dispositif générateur de signaux de service (GS) et à un dispositif générateur de messages (GM), la sortie (S) du mélangeur étant reliée à la ligne téléphonique (B, LT).

2. Système selon la revendication 1, caractérisé en ce qu'il comprend un circuit de synchronisation (CS) des émissions des signaux de service et des messages.

3. Système selon l'une des revendications précédentes, caractérisé en ce que le mélangeur (TRM) est formé par un transformateur à deux enroulements primaires et un enroulement secondaire et en ce que les bornes libres des enroulements primaires constituent les entrées (E1, E2) du mélangeur, la borne commune des enroulements étant mise à la masse.

4. Système selon l'une des revendications précédentes, caractérisé en ce qu'il comprend un inverseur (IN1) assurant sa connexion dans la ligne téléphonique (A, B) acheminant les signaux de service.

5. Système selon des revendications précédentes, caractérisé en ce que le circuit relié à l'entrée (E1) du mélangeur (TRM) comprend un amplificateur (AM) tandis que le circuit relié à l'autre entrée (E2) du mélangeur (TRM) comporte avantageusement un atténuateur (AT).

6. Système selon l'une des revendications 2 à 5, caractérisé en ce que le circuit de synchronisation (CS) comprend un agencement de circuit I pour la commande de la mise en marche et de l'arrêt du dispositiv générateur de messages (GM), qui est relié (en E2) au tronçon d'arrivée (A) des signaux de service, de la ligne téléphonique et est sensible à ces signaux de service.

7. Système selon l'une des revendications 2 à 6, caractérisé en ce que le circuit de synchronisation (CS) comprend un agencement de circuits II de commande de l'établissement et de l'interruption d'une liaison entre le mélangeur (TRM) et le dispositif générateur de messages (GM) en fonction de la présence, absence et/ou de la fin d'un message de provenance du dispositif générateur (GM), à une entrée (E1) du circuit de synchronisation.

8. Système selon la revendication 6 ou 7, caractérisé en ce que le circuit de synchronisation (CS) comprend des moyens (D9) d'interconnexion des agencements I, II, adaptés pour provoquer la production d'un signal de commande de l'arrêt du dispositif générateur (GM) par l'agencement I, à la suite de la détection par l'agencement II, de la fin d'un message.

9. Système selon l'une des revendications 6 à 8, caractérisé en ce que l'agencement de circuit I du circuit de synchronisation (CS) comprend un moyen (B2) de commande de l'arrêt du dispositif générateur (GM), avant la fin d'un message.

10. Système selon l'une des revendications 7 à 9, caractérisé en ce que le circuit de synchronisation (CS) comprend un commutateur (r1) interposé entre son entrée (E1) de réception des messages et sa sortie (S) et un circuit de commande du commutateur (r1), qui est sensible à la présence d'un message à son entrée réceptrice des messages (E1).

11. Système selon l'une des revendications 6 à 9, caractérisé en ce que l'agencement de circuit I, comprend une bascule bistable (BA1) à deux entrées et à deux sorties, une entrée (P1) étant reliée à un circuit détecteur d'un signal de service pour provoquer la production d'un signal de mise en marche du dispositif générateur (GM), tandis que l'autre entrée (P2) constitue l'entrée de commande de l'arrêt du dispositif générateur (GM).

12. Système selon l'une des revendications 6 à 11, caractérisé en ce que l'agencement de circuit II du circuit de synchronisation (CS) comprend une bascule bistable (BA2), une entrée (P4) étant sensible à la présence d'un message à l'entrée réceptrice de messages (E1), tandis que l'autre entrée (P3) et sensible à la fin d'un message.

13. Système selon la revendication 12, caractérisé en ce qu'une sortie de la bascule (BA2) est reliée à un circuit de commande d'un relais (R), le commutateur (r1) étant un contact commandé par ce relais.

14. Système selon l'une des revendications 10 à 13, caractérisé en ce que chaque bascule (BA1, BA2) est formée par deux portes — NI, la sortie d'une porte étant reliée à une entrée de l'autre porte.

15. Système selon l'une des revendications 1 à 14, caractérisé en ce que le générateur de messages est constitué par un dispositif émetteur de signaux tel que des signaux de données, susceptibles d'être reproduits dans le poste téléphonique demandeur de l'établissement de la ligne téléphonique, sur un support tel qu'un écran de visualisation (EV) ou un support d'impression (IM), ce dispositif émetteur (GM) étant relié à une entrée du mélangeur (M) dont une autre entrée reçoit les signaux de service en provenance du générateur de service (GS), la sortie du mélangeur (M) étant susceptible d'être connectée à la ligne d'abonné demandeur (LT).

16. Système selon la revendication 15, caractérisé en ce qu'il comprend un séparateur (SP) des signaux de service, des signaux à reproduire sur ledit support, dans le poste d'abonné.

17. Système selon l'une des revendications 15 ou 16, caractérisé en ce qu'il comprend un détecteur (D1) de la présence de signaux de service et, le cas échéant, un détecteur (D2) de l'instant de la réponse du poste d'abonné demandé, ces détecteurs étant reliés à un circuit de commande (C) respectivement de mise en marche et d'arrêt du générateur de messages (GM).

18. Système selon l'une des revendications précédentes, caractérisé en ce que le poste d'abonné (A) est équipé d'un dispositif mémoire (ME) permettant de stocker les informations reçues du générateur de messages (GM) pendant la phase d'établissement de la liaison avec le poste d'abonné demandé et de reproduire ces informations à tout instant approprié désiré sur le support tel que l'écran de visualisation (EV) ou le support d'impression.

19. Système selon l'une des revendications précédentes, caractérisé en ce qu'un dispositif (MODEM MD2) est interposé entre le générateur de messages (GM) et le mélangeur (M).

20. Système selon l'une des revendications précédentes, caractérisé en ce qu'il comprend un commutateur (CM1) permettant de mettre en circuit ou hors circuit le mélangeur, ce commutateur pouvant être commandé en sychronisme avec la commande du générateur de messages (GM).

**Patentansprüche**

1. Einrichtung zur Übermittlung von Nachrichten an eine Fernsprechstelle durch die dieser zugeordneten Fernsprechleitung in einer Fernsprechanlage mit einer Vorrichtung zur Erzeugung von Dienstsignalen bezüglich der Herstellung einer Fernsprechverbindung zwischen dieser Stelle und einer anderen Fernsprechstelle, dadurch gekennzeichnet, daß sie einen Mischer (TRM, M) mit zwei Eingängen (E1, E2) umfaßt, die jeweils an den Dienstsignalgeber (GS) und an eine Nachrichtenerzeugungsvorrichtung (GM) angeschlossen sind, wobei der Ausgang (S) des Mischers an die Fernsprechleitung (B, LT) angeschlossen ist.

2. Einrichtung nach Anspruch 1, dadurch gekennzeichnet, daß sie eine Schaltung (CS) zur Synchronisierung der Sendungen von Dienstsignalen und von Nachrichten umfaßt.

3. Einrichtung nach einem der vorangehenden Ansprüche, dadurch gekennzeichnet, daß der Mischer (TRM) durch einen Wandler mit zwei Primärwicklungen und einer Sekundärwicklung gebildet ist und daß die freien Anschlußklemmen der Primärwicklungen die Eingänge (E1, E2) des Mischers bilden, wobei die gemeinsame Anschlußklemme der Wicklungen an die Masse angeschlossen ist.

4. Einrichtung nach einem der vorangehenden Ansprüche, dadurch gekennzeichnet, daß sie einen, ihren Anschluß in der die Dienstsignale vermittelnden Fernsprechleitung (A, B) bewirkenden Umschalter (IN1) aufweist.

5. Einrichtung nach einem der vorangehenden Ansprüche, dadurch gekennzeichnet, daß die mit dem Eingang (E1) des Mischers (TRM) verbundene Schaltung einen Verstärker (AM) umfaßt, während die mit dem anderen Eingang (E2) des Mischers (TRM) verbundene Schaltung in vorteilhafter Weise einen Dämpfer (AT) aufweist.

6. Einrichtung nach einem der Ansprüche 2 bis 5, dadurch gekennzeichnet, daß die Synchronisierungsschaltung (CS) eine Schaltungsanordnung I zur Steuerung des Einschaltens und des Ausschaltens der Nachrichtengebervorrichtung (GM) umfaßt, welche (bei E2) an den Dienstsignaleingangsabschnitt (A) der Fernsprechleitung angeschlossen und für diese Dienstsignale empfindlich ist.

7. Einrichtung nach einem der Ansprüche 2 bis 6, dadurch gekennzeichnet, daß die Synchronisierungsschaltung (CS) eine Schaltungsanordnung II zur Steuerung der Herstellung und der Unterbrechung einer Verbindung zwischen dem Mischer (TRM) und der Nachrichtengebervorrichtung (GM) in Abhängigkeit des Vorliegens, Ausbleibens und/oder des Endes einer von der Gebervorrichtung (GM) herrührenden Nachricht, an einem Eingang (E1) der Synchronisierungsschaltung aufweist.

8. Einrichtung nach Anspruch 6 oder 7, dadurch gekennzeichnet, daß die Synchronisierungsschaltung (CS) Mittel (D9) zur Zusammenschaltung der Anordnungen I, II umfaßt, welche geeignet sind, ein Signal zur Steuerung des Ausschaltens der Gebervorrichtung (GM) durch die Anordnung I im Anschluß an die Ermittlung des Endes einer Nachricht durch die Anordnung II, zu veranlassen.

9. Einrichtung nach einem der Ansprüche 6 bis 8, dadurch gekennzeichnet, daß die Schaltungsanordnung I der Synchronisierungsschaltung (CS) ein Mittel (B2) zur Steuerung des Ausschaltens der Gebervorrichtung (GM) vor dem Ende einer Nachricht aufweist.

10. Einrichtung nach einem der Ansprüche 7 bis 9, dadurch gekennzeichnet, daß die Synchronisierungsschaltung (CS) einen zwischen deren Nachrichtenempfangseingang (E1) und deren Ausgang (S) angeordneten Umschalter (r1) und eine Schaltung zur Steuerung des Umschalters (r1), die gegenüber des Vorhandenseins einer Nachricht an ihrem Nachrichtenempfangseingang (E1) empfindlich ist, aufweist.

11. Einrichtung nach einem der Ansprüche 6 bis 9, dadurch gekennzeichnet, daß die Schaltungsanordnung I ein bistabiles Kippglied (BA1) mit zwei Eingängen und zwei Ausgängen aufweist, wobei der eine Eingang (P1) an eine Schaltung zur Ermittlung eines die Erzeugung eines Signals zum Einsatz der Gebervorrichtung (GM) veranlassenden Dienstsignals angeschlossen ist, während der andere Eingang (P2) den Eingang zur Steuerung des Ausschaltens der Gebervorrichtung (GM) bildet.

12. Einrichtung nach einem der Ansprüche 6 bis 11, dadurch gekennzeichnet, daß die Schaltungsanordnung II der Synchronisierungsschaltung (CS) ein bistabiles Kippglied (BA2) umfaßt, wobei der eine Eingang (B4) gegenüber dem Vorhandensein einer Nachricht an dem Nachrichtenempfangseingang (E1) empfindlich ist, während der andere Eingang (B3) gegenüber dem Abschluß einer Nachricht empfindlich ist.

13. Einrichtung nach Anspruch 12, dadurch gekennzeichnet, daß ein Ausgang des Kippgliedes (BA2) an einer Schaltung zur Steuerung eines Relais angeschlossen ist, wobei der Umschalter (r1) ein durch dieses Relais betätigter Kontakt ist.

14. Einrichtung nach einem der Ansprüche 10 bis 13, dadurch gekennzeichnet, daß jedes Kippglied (BA1, BA2) durch zwei WEDER-NOCH-Gatter gebildet ist, wobei der Ausgang eines Gatters an dem Eingang des anderen Gatters angeschlossen ist.

15. Einrichtung nach einem der Ansprüche 1 bis 14, dadurch gekennzeichnet, daß der Nachrichtengeber aus einer Vorrichtung zur Sendung von Signalen wie Datensignalen besteht, welche in der die Herstellung der Fernsprechleitung anmeldenden Fernsprechstelle auf einem Träger wie einem Sichtbarmachungsschirm (EV) oder einem Druckträger (IM) nachbildbar ist, wobei diese Sendervorrichtung (GM) an einen Eingang des Mischers (M) angeschlossen ist, von dem ein anderer Eingang die von dem Dienstsignalgeber (GS) herrührenden Dienstsignale empfängt, wobei der Ausgang des Mischers (M) an die Leitung (LT) des anmeldenden Teilnehmers anschließbar ist.

16. Einrichtung nach Anspruch 15, dadurch gekennzeichnet, daß sie in dem Teilnehmerfernsprecher einen Trenner (SP) zur Trennung der Dienstsignale von den auf dem besagten Träger nachzubildenden Signalen aufweist.

17. Einrichtung nach einem der Ansprüche 15 oder 16, dadurch gekennzeichnet, daß sie einen Detektor (D1) zur Ermittlung von Dienstsignalen und ggf. einen Detektor (D2) zur Ermittlung des Zeitpunktes der Antwort der angerufenen Teilnehmerfernsprechstelle umfaßt, wobei diese Detektoren an eine Schaltung (C) zur Steuerung jeweils des Einschaltens und des Ausschaltens des Nachrichtengebers (GM) angeschlossen sind.

18. Einrichtung nach einem der vorangehenden Ansprüche, dadurch gekennzeichnet, daß die Teilnehmerfernsprechstelle (A) mit einem Speichergerät (ME) ausgerüstet ist, welches das Speichern von von dem Nachrichtengeber (GM) empfangenen Nachrichten während der Phase der Herstellung der Verbindung mit der angerufenen Teilnehmerfernsprechstelle und die Nachbildung dieser Nachrichten zu jedem geeigneten gewünschten Zeitpunkt auf dem Träger wie dem Sichtbarmachungsschirm (EV) bzw. dem Druckträger ermöglicht.

19. Einrichtung nach einem der vorangehenden Ansprüche, dadurch gekennzeichnet, daß eine Vorrichtung (MODEM MD2) zwischen dem Nachrichtengeber (GM) und dem Mischer (M) geschaltet ist.

20. Einrichtung nach einem der vorangehenden Ansprüche, dadurch gekennzeichnet, daß sie einen das Einschalten bzw. Ausschalten des Mischers gestattenden Umschalter (CM1) umfaßt, wobei dieser Umschalter im Gleichlauf mit der Steuerung des Nachrichtengebers (GM) steuerbar ist.

**Claims**

1. A system for transmitting messages to a telephone station through the telephone line associated with the latter, in a telephone installation including a device for generating service signals relating to the making of a telephone connection between said station and another telephone station, characterized in that it includes a mixer (TRM, M) with two inputs ($E_1$, $E_2$) connected to the service signal generating device (GS) and to a message generating device (GM), the output (S) of the said mixer being connected to the telephone line (B, LT).

2. A system to claim 1, characterized in that it includes a circuit (CS) for synchronizing the emissions of the service signals and of the messages.

3. A system according to one of the foregoing claims characterized in that the mixer (TRM) is constituted by a transformer with two primary windings and one secondary winding and in that the free terminals of the primary windings constitute the inputs ($E_1$, $E_2$) of the mixer, the common terminal of the windings being earthed.

4. A system according to one of the foregoing claims, characterized in that it includes an inverter (IN1) for its connection into the telephone line (A, B) routing the service signals.

5. A system according to one of the foregoing claims, characterized in that the circuit connected to the input (E1) of the mixer (TRM) includes an amplifier (AM) whereas the circuit connected to the other input (E2) of the mixer (TRM) advantageously includes an attenuator (AT).

6. A system according to one of claims 2 to 5, characterized in that the synchronizing circuit (CS) includes a control circuit arrangement I for starting and stopping the message generating device (GM), which is connected (at $E_2$) to the service signal intake portion (A) of the telephone line and is responsive to the said service signals.

7. A system according to one of claims 2 to 6, characterized in that the synchronizing circuit (CS) includes a control circuit arrangement II for making and breaking a connection between the mixer (TRM) and the message generating device (GM) depending on the presence, absence and/or the end of a message proceeding from the generating device (GM), at an input ($E_1$) of the synchronizing circuit.

8. A system according to claims 6 or 7, characterized in that the synchronizing circuit (CS) includes means (D9) for interconnecting the arrangements I, II, adapted to cause the arrangement I to produce a control signal for stopping the generating device (GM), following the detection of the end of a message by the arrangement II.

9. A system according to one of claims 6 to 8, characterized in that the circuit arrangement I of the synchronizing circuit (CS) includes a control means (B2) for stopping the generating device (GM), before the end of a message.

10. A system according to one of claims 7 to 9, characterized in that the synchronizing circuit (CS) includes a switch (r1) inserted between its message receiving input ($E_1$) and its output (S) and a circuit for the control of the switch (r1), which is responsive to the presence of a message at its message receiving input ($E_1$).

11. A system according to one of claims 6 to 9, characterized in that the circuit arrangement I includes a flip-flop (BA1) with two inputs and two outputs, one input (P1) being connected to a service signal detecting circuit to cause the production of a signal for starting the generating device (GM), whereas the other input (P2) constitutes the stoppage control input of the generating device (GM).

12. A system according to one of claims 6 to 11, characterized in that the circuit arrangement II of the synchronizing circuit (CS) includes a flip-flop (BA2), one input (P4) being responsive to the presence of a message at the message receiving input ($E_1$), whereas the other input (P3) is responsive to the end of a message.

13. A system according to claim 12, characterized in that one output of the flip-flop (BA2) is connected to a control circuit of a relay (R), the switch (r1) being a contact controlled by the said relay.

14. A system according to one of claims 10 to 13, characterized in that each flip-flop (BA1, BA2) is constituted by two gates — NI, the output of one gate being connected to an input of the other gate.

15. A system according to one of claims 1 to 14, characterized in that the message generator is constituted by a device for emitting signals such as data signals, capable of being reproduced at the telephone station requesting the making of the telephone connection, on a medium such as a display screen (EV) or a printing medium (IM), the said emitting device (GM) being connected to an input of the mixer (M) another input of which receives the signal services from the service generator (GS), the output of the mixer (M) being adapted to be connected to the calling subscriber's line (LT).

16. A system according to claim 15, characterized in that it includes a separator (SP) for separating the service signals from the signals to be reproduced on the said medium, at the subscriber's station.

17. A system according to one of claims 15 or 16, characterized in that it includes a means (D1) for detecting the presence of service signals and, if appropriate, a means (D2) for detecting the instant of response of the subscriber's station called, the said detecting means being connected to a control circuit (C) for starting and stopping, respectively, the message generator (GM).

18. A system according to one of the foregoing claims, characterized in that the subscriber's station (A) is equipped with a storage device (ME) allowing the storage of the information received from the message generator (GM) during the stage of making of the connection with the subscriber's station called and the reproduction of such information at any desired appropriate time on the medium such as the display screen (EV) or the printing medium.

19. A system according to one of the foregoing claims, characterized in that a device (MODEM MD2) is inserted between the message generator (GM) and the mixer (M).

20. A system according to one of the foregoing claims, characterized in that it includes a switch (CM1) for cutting in or cutting off the mixer, which switch may be controlled in synchronism with the control of the message generator (GM).

Fig. 1

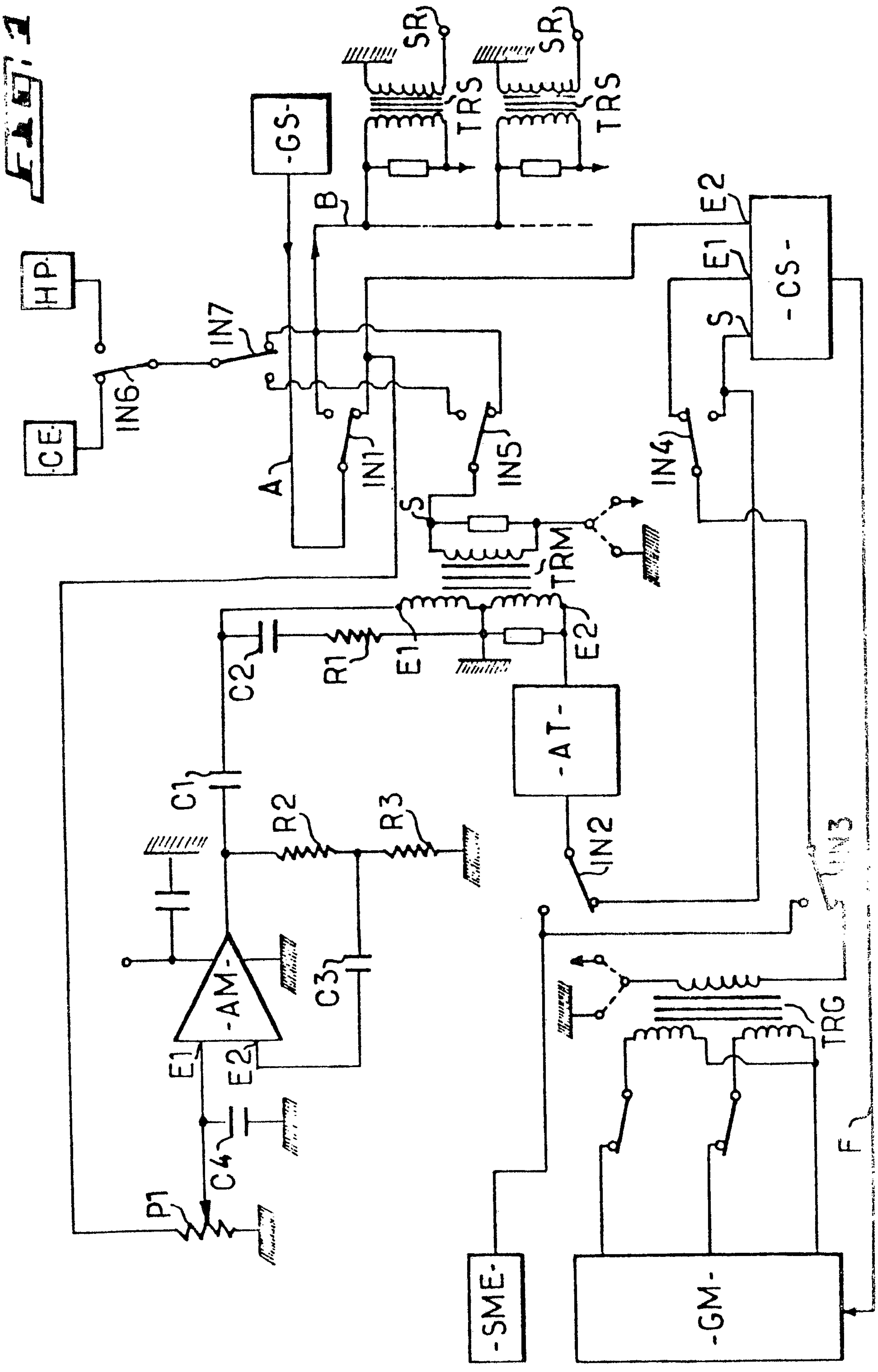
HP
CE
IN6
IN7
-GS-
SR
SR
TRS
TRS
B
A
IN1
IN5
S
TRM
E2
E1
S
-CS-
IN4
C2
R1
E1
E2
-AT-
C1
R2
R3
IN2
IN3
-AM-
C3
E1
E2
C4
P1
TRG
F
-SME-
-GM-

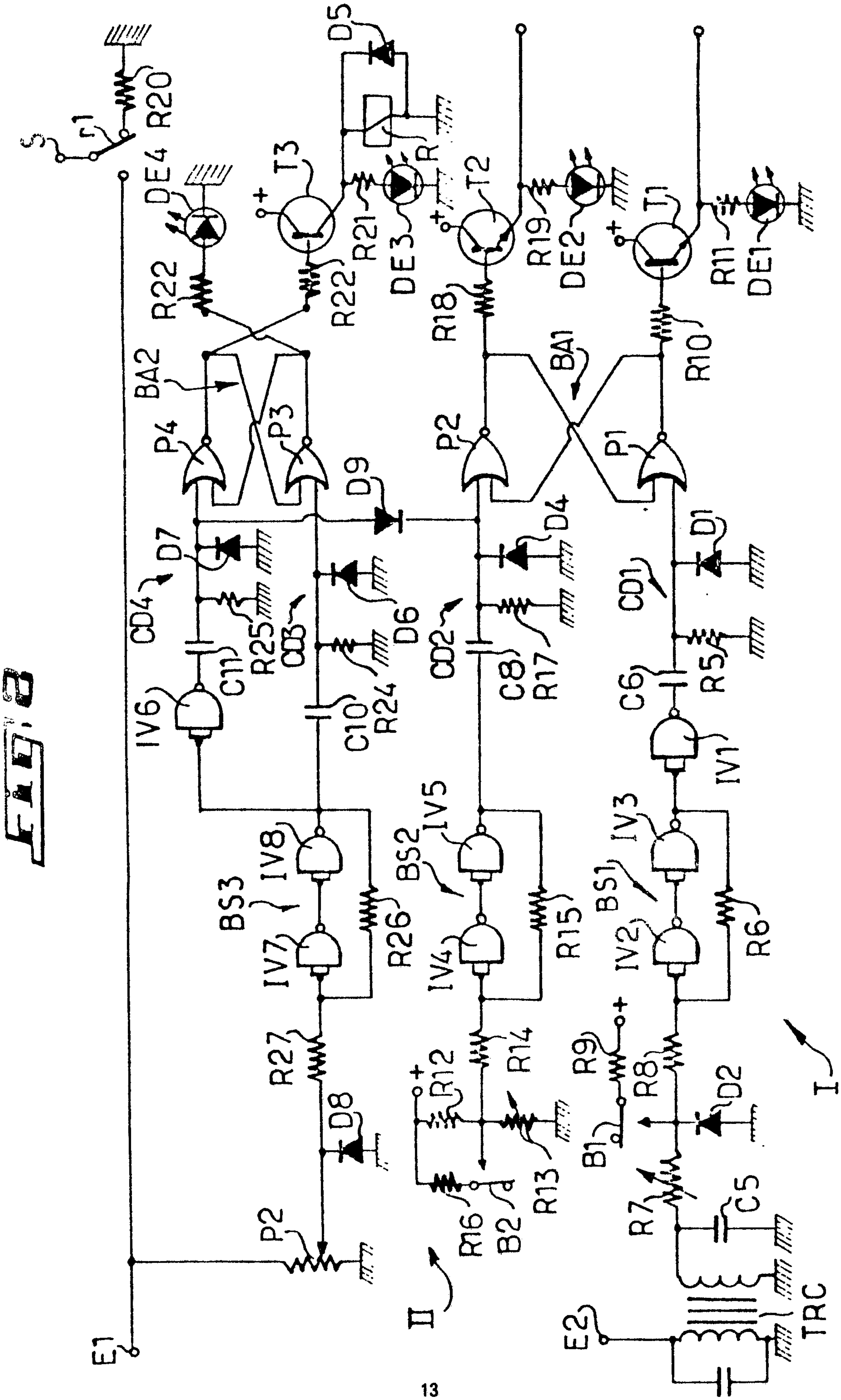

E1
E2
TRC
C5
R7
B1
R9
R8
D2
R6
IV2
BS1
IV3
IV1
C6
R5
CD1
D1
P1
R10
BA1
T1
R11
DE1
II
R16
B2
R13
R12
R14
IV4
R15
BS2
IV5
C8
CD2
R17
D4
P2
R18
T2
R19
DE2
P2
R27
D8
IV7
BS3
IV8
R26
C10
R24
CD3
D6
IV6
C11
R25
CD4
D7
D9
P3
P4
BA2
R22
R22
DE4
T3
R21
DE3
R
D5
r1
R20
I


Fig. 2

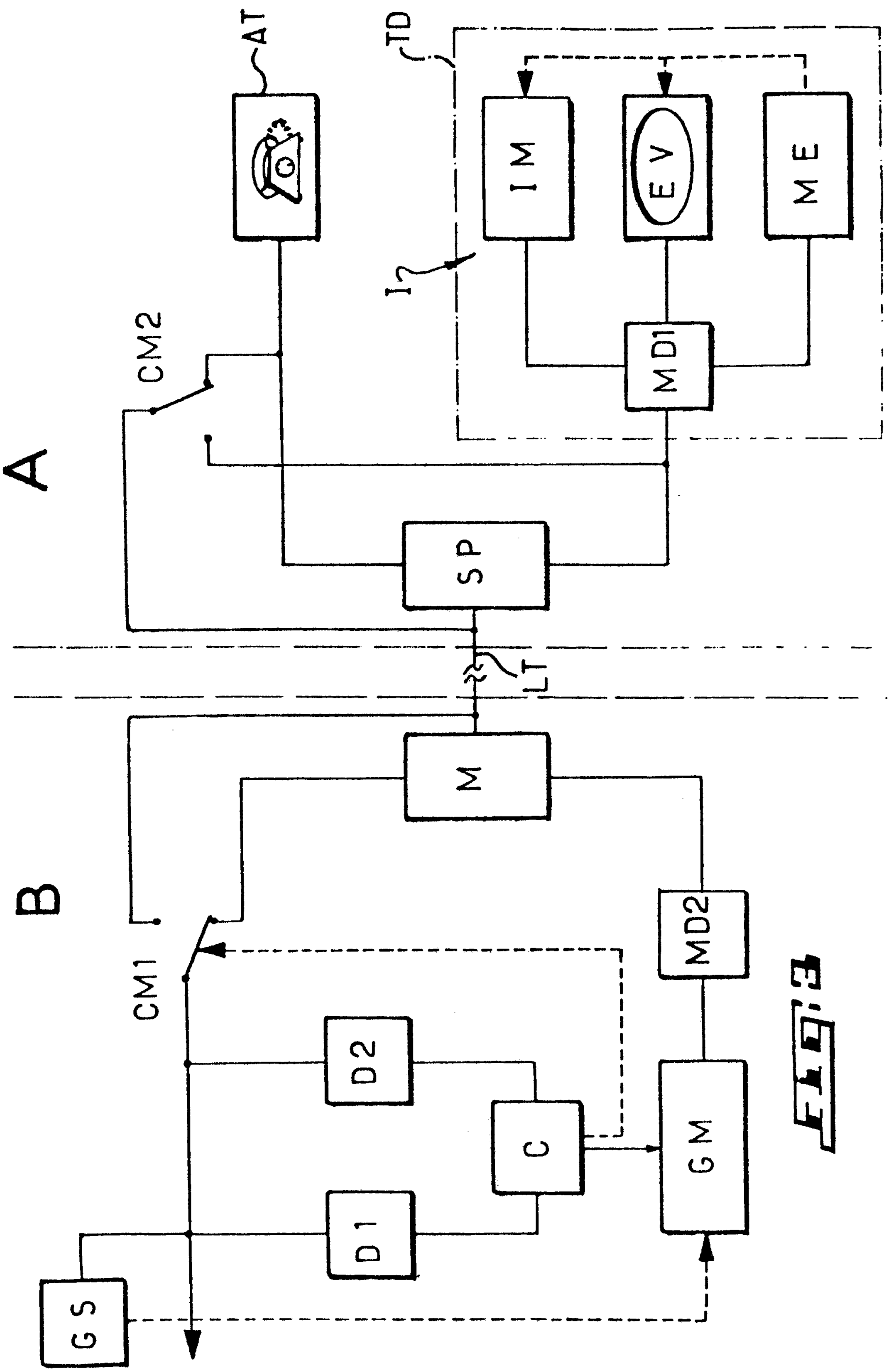


FIG. 3